# EUROPÄISCHE PATENTANMELDUNG

(11) **EP 4 342 570 A1**
(43) Veröffentlichungstag der Anmeldung: **27.03.2024**
(21) Anmeldenummer: 23190169.5
(22) Anmeldetag: 08.08.2023
(51) Int. Cl.: B01D 53/04, B01D 53/26

(54) **WECHSELKARTUSCHE**

(30) Priorität: 22.09.2022 DE 102022210022
(71) Anmelder: MAHLE International GmbH, 70376 Stuttgart (DE)
(72) Erfinder: KOPPI, Peter, 9412 Sankt Margarethen (AT)
(74) Vertreter: BRP Renaud & Partner mbB Rechtsanwälte Patentanwälte Steuerberater

(57) **Zusammenfassung**

Die Erfindung betrifft eine Wechselkartusche (1) zum Reinigen und Trocknen von Luft, mit einem Gehäuse (2), in dem ein erster Strömungspfad (3) mit einer Filtereinrichtung (4) und einer Trocknungseinrichtung (5) sowie ein dazu entgegengesetzter zweiter Strömungspfad (6) mit einer Kohlenwasserstoffadsorbereinrichtung (7) verläuft.

Die Erfindung betrifft außerdem einen Ausgleichsbehälter (8) mit einer solchen Wechselkartusche (1).

## Beschreibung

Die vorliegende Erfindung betrifft eine Wechselkartusche sowie einen Ausgleichsbehälter für eine dielektrische Kühlflüssigkeit mit einer solchen Wechselkartusche. Die Erfindung betrifft außerdem ein Kühlsystem für eine Batterieanordnung mit einem solchen Ausgleichsbehälter und ein Elektrofahrzeug mit einer Batterieanordnung und einem solchen Kühlsystem.

Um moderne Elektrofahrzeuge möglichst effizient betreiben zu können, ist es erforderlich, einen Energiespeicher, beispielsweise eine Fahrzeugbatterie, in einem optimalen Temperaturfenster zu betreiben. Hierzu ist je nach Umgebungstemperaturen eine Kühlung oder ein Erwärmen der Fahrzeugbatterie erforderlich. Um diesbezüglich wieder eine möglichst effiziente Kühlung der Fahrzeugbatterie erreichen zu können, werden sogenannte dielektrische Kühlflüssigkeiten eingesetzt, die aufgrund ihrer elektrisch isolierenden Wirkung einen direkten Kontakt mit beispielsweise den zu kühlenden Energiespeicherzellen erlauben. Um die Kühlflüssigkeit langfristig einsetzen zu können, ist es zudem erforderlich, einen Wasseranteil derselben auf ein Minimum bzw. einen vordefinierten Grenzwert zu begrenzen. Dies ist insbesondere dann schwierig, sofern sich das Elektrofahrzeug in unterschiedlichsten Temperaturbereichen bewegt, in welchen die Kühlflüssigkeit, beispielsweise Kühlöl, entsprechenden Volumenschwankungen unterworfen ist. Besonders bei offenen Systemen muss dabei sichergestellt werden, dass von einer Umgebung weder Schmutz noch Wasser eingetragen wird. Gleichzeitig muss aber auch gewährleistet werden, dass leicht flüchtige Kühlölbestandteile, wie beispielsweise Kohlenwasserstoffe, nicht in die Umgebung gelangen.

Um dies zu erreichen, werden beispielsweise Trocknungseinrichtungen, Filtereinrichtungen sowie Adsorbereinrichtungen, wie Aktivkohlefilter, eingesetzt. Nachteilig bei diesen Systemen ist jedoch, dass diese separat an einem entsprechenden Ausgleichsbehälter für eine dielektrische Kühlflüssigkeit angebracht und über entsprechende Ventileinrichtungen gesteuert werden müssen.

Die vorliegende Erfindung beschäftigt sich daher mit dem Problem, eine Wechselkartusche anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Wechselkartusche anzugeben, in der eine Filtereinrichtung, eine Trocknungseinrichtung sowie eine Kohlenwasserstoffadsorbereinrichtung integriert sind. Die erfindungsgemäße Wechselkartusche dient dabei zum Reinigen und Trocknen von (Ausgleichs-)Luft und besitzt ein Gehäuse, in dem ein erster Strömungspfad mit einer Filtereinrichtung und einer Trocknungseinrichtung sowie ein dazu entgegengesetzt gerichteter zweiter Strömungspfad mit einer Kohlenwasserstoffadsorbereinrichtung verläuft. Eine derartige Wechselkartusche kann beispielsweise über einen Schraubverschluss vergleichsweise einfach an einem Ausgleichsbehälter für eine dielektrische Kühlflüssigkeit eines Kühlsystems für eine Batterieanordnung angeschraubt werden, wobei durch die integrierte Filtereinrichtung verhindert wird, dass in der Umgebung vorhandene Schmutzstoffe in die Kühlflüssigkeit gelangen. Über die Trocknungseinrichtung kann zudem ein Wasseranteil von aus der Umgebung in den Ausgleichsbehälter, beispielsweise aufgrund von temperaturbedingten Volumenschwankungen, eintretender Luft reduziert bzw. auf einen vordefinierten Grenzwert abgesenkt werden, wodurch zuverlässig verhindert werden kann, dass die Funktionsfähigkeit der Kühlflüssigkeit beeinträchtigt bzw. diese aufgrund eines zu hohen Wasseranteils unter Umständen sogar elektrisch leitend wird, was im ungünstigsten Fall zu einem Kurzschluss führen könnte. Der erste Strömungspfad führt demzufolge von einer Umgebung in den Ausgleichsbehälter, während der zweite Strömungspfad vom Ausgleichsbehälter in die Umgebung führt. Im zweiten Strömungspfad ist dabei die Kohlenwasserstoffadsorbereinrichtung angeordnet, die leicht flüchtige Kohlenwasserstoffanteile adsorbiert und dadurch nicht in die Umgebung gelangen lässt. Zwischen der Wechselkartusche und dem Ausgleichsbehälter sind dabei selbstverständlich auch noch Ventileinrichtungen, insbesondere Rückschlagventile, angeordnet, die eine Strömung im ersten Strömungspfad ausschließlich von der Umgebung in den Ausgleichsbehälter und im zweiten Strömungspfad ausschließlich vom Ausgleichsbehälter in die Umgebung erlauben. Mit der erfindungsgemäßen Wechselkartusche ist es vergleichsweise einfach, sämtliche bislang unter Umständen separat zueinander ausgebildete Komponenten, zusammenzufassen und dadurch eine Wartung eines Kühlsystems für eine Batterieanordnung deutlich zu vereinfachen.

Bei einer vorteilhaften Weiterbildung der erfindungsgemäßen Wechselkartusche weist diese an einem Eingang des zweiten Strömungspfades ein Innengewinde zum Anschrauben an einen Ausgleichsbehälter für Kühlflüssigkeit auf, wobei die Kohlenwasserstoffadsorbereinrichtung koaxial zu einer Achse der Wechselkartusche angeordnet ist. Hierdurch kann ein einfaches Montieren der Wechselkartusche an dem Ausgleichsbehälter sowie auch ein einfaches Abschrauben von diesem ermöglicht werden, wodurch ein Austausch sehr einfach wird. Durch den koaxial in der Wechselkartusche verlaufenden zweiten Strömungspfad kann dieser bauraumoptimiert angeordnet werden. Die Kohlenwasserstoffadsorbereinrichtung weist beispielsweise Aktivkohle auf, welche nicht nur kostengünstig, sondern zugleich auch regenerierbar ist.

Bei einer weiteren vorteilhaften Ausführungsform der erfindungsgemäßen Wechselkartusche ist die Filtereinrichtung als ein die Kohlenwasserstoffadsorbereinrichtung koaxial umgebender Faltenstern ausgebildet. Ein derartiger Faltenstern ist für Filtrationszwecke hinlänglich bekannt und bietet eine vergleichsweise große Oberfläche zur Filtration von beispielsweise Schmutzpartikeln. Die Trocknungseinrichtung umgibt dabei die Kohlenwasserstoffadsorbereinrichtung und die Filtereinrichtung wiederum koaxial. Die im ersten Strömungspfad von der Umgebung in den Ausgleichsbehälter strömende Luft durchströmt somit zunächst die Filtereinrichtung und wird dort von beispielsweise Schmutzstoffen gereinigt. Anschließend durchströmt sie die Trocknungseinrichtung, wodurch ein Wasseranteil reduziert wird. Durch die koaxiale Anordnung der Filtereinrichtung und der Trocknungseinrichtung kann ein in bekannter Weise in herkömmlichen Filtereinrichtungen verlaufender Strömungsweg realisiert werden.

Bei einer weiteren vorteilhaften Ausführungsform der erfindungsgemäßen Wechselkartusche weist die Trocknungseinrichtung ein Molekularsieb auf. Ein derartiges Molekularsieb kann zum Beispiel synthetische Zeolithe oder andere Stoffe aufweisen, die eine hohe Adsorptionskapazität für Gase, Dämpfe und/oder gelöste Stoffe mit bestimmten Molekülgrößen aufweisen.

Zweckmäßig weist das Gehäuse der Wechselkartusche einen Deckel und einen Boden auf. Im Deckel des Gehäuses dabei eine erste Öffnung angeordnet, während im Boden eine seitlich angeordnete zweite Öffnung sowie eine zentral angeordnete dritte Öffnung vorgesehen sind. Der erste Strömungspfad verläuft dabei von der ersten zur zweiten Öffnung, während der zweite Strömungspfad von der dritten Öffnung zur ersten Öffnung verläuft. Hierdurch ist es möglich, die dritte Öffnung und damit den Eingang des zweiten Strömungspfades in einer Schraubachse der Wechselkartusche zu platzieren, wodurch insbesondere ein unerwünschtes Austreten von Kohlenwasserstoffen in die Umgebung vermieden werden kann.

Bei einer weiteren bevorzugten Ausführungsform der erfindungsgemäßen Wechselkartusche ist auf einer Trockenseite der Trocknungseinrichtung ein Feuchtesensor angeordnet. Hierdurch ist es möglich, die Feuchte von in beispielsweise einen Ausgleichsbehälter für dielektrische Kühlflüssigkeit gelangender Luft zu erfassen und bei einem Überschreiten ein entsprechendes Warnsignal zu erzeugen, welches zu einem Austausch der Wechselkartusche auffordert. Zusätzlich oder alternativ kann im Bereich der Kohlenwasserstoffadsorbereinrichtung ein Kohlenwasserstoffsensor angeordnet sein, der insbesondere ausgangsseitig des zweiten Strömungspfades und der Kohlenwasserstoffadsorbereinrichtung angeordnet ist. Hierdurch ist es möglich, die Adsorbtionsfähigkeit der Kohlenwasserstoffadsorbereinrichtung zu überwachen und bei Überschreiten eines vordefinierten Grenzwertes an Kohlenwasserstoffen am Ausgang der Kohlenwasserstoffadsorbereinrichtung ein entsprechendes Warnsignal zu erzeugen, welches ebenfalls zum Austausch der Wechselkartusche auffordert.

Die vorliegende Erfindung beruht weiter auf dem allgemeinen Gedanken, einen Ausgleichsbehälter für eine dielektrische Kühlflüssigkeit anzugeben, mit einer Wechselkartusche entsprechend den vorherigen Absätzen. Zwischen dem Ausgleichsbehälter und der Wechselkartusche ist dabei ein erstes Rücklaufsperrventil angeordnet, das von der Umgebung zum Ausgleichsbehälter durchlässig ist, sowie ein zweites Rücklaufsperrventil, das vom Ausgleichsbehälter zur Kohlenwasserstoffadsorbereinrichtung durchlässig ist. Das erste Rücklaufsperrventil öffnet dabei ausschließlich dann, wenn eine vordefinierte Druckdifferenz zwischen einem Innenraum des Ausgleichsbehälters und der Umgebung herrscht. Dies kann beispielsweise bei kälteren Temperaturen der Fall sein, bei welchen die dielektrische Kühlflüssigkeit an Volumen verliert und sich dadurch in dem Ausgleichsbehälter ein Unterdruck aufbaut, der schließlich zum Öffnen des ersten Rücklaufsperrventils führt, sodass Luft aus der Umgebung über den ersten Strömungspfad und damit die Filtereinrichtung und die Trocknungseinrichtung in den Ausgleichsbehälter angesaugt wird. Steigt hingegen die Temperatur, so nimmt die dielektrische Kühlflüssigkeit an Volumen zu, was ab einem vordefinierten Überdruck im Ausgleichsbehälter zu einem Öffnen des zweiten Rücklaufsperrventils und damit zu einem Luftaustrag vom Ausgleichsbehälter über den zweiten Strömungspfad mit der Kohlenwasserstoffadsorbereinrichtung in die Umgebung führt. Beim Durchströmen der aus dem Ausgleichsbehälter strömenden Luft durch die Kohlenwasserstoffadsorbereinrichtung werden noch in der Luft vorhandene Kohlenwasserstoffe an der Aktivkohle der Kohlenwasserstoffadsorbereinrichtung angelagert, wodurch eine Kontamination der Umgebung mit Kohlenwasserstoffen verhindert, zumindest aber reduziert werden kann.

Zweckmäßig sind das erste Rücklaufsperrventil und das zweite Rücklaufsperrventil an dem Ausgleichsbehälter angeordnet. Dies bietet den großen Vorteil, dass bei einem Austausch der Wechselkartusche, beispielsweise aufgrund einer beladenen Kohlenwasserstoffadsorbereinrichtung, nur die Wechselkartusche entsorgt werden muss, die beiden Rücklaufsperrventile, jedoch unverändert weiterverwendet werden können. Alternativ ist rein theoretisch auch denkbar, dass das erste Rücklaufsperrventil und das zweite Rücklaufsperrventil an der Wechselkartusche angeordnet sind.

Bei einer besonders bevorzugten Ausführungsform des erfindungsgemäßen Ausgleichsbehälters ist an diesem ein Stutzen mit einem Außengewinde angeordnet, wobei das zweite Rücklaufsperrventil in dem Stutzen angeordnet ist. In diesem Fall besitzt die Wechselkartusche ein komplementär zu dem am Stutzen angeordneten Außengewinde ausgebildetes Innengewinde, über welches es mit dem Ausgleichsbehälter verschraubbar ist. Die Kohlenwasserstoffadsorbereinrichtung ist dabei koaxial zur Achse der Wechselkartusche und zum Stutzen des Ausgleichsbehälters angeordnet. Ein derartiger Ausgleichsbehälter bietet den großen Vorteil, dass das zweite Rücklaufsperrventil unverändert am Ausgleichsbehälter bleibt, selbst für den Fall, dass die Wechselkartusche abgeschraubt wird.

Alternativ kann an dem erfindungsgemäßen Ausgleichsbehälter auch ein Stutzen mit einem Innengewinde angeordnet sein, wobei das zweite Rücklaufsperrventil in dem Stutzen angeordnet ist. In diesem Fall besitzt die Wechselkartusche ein komplementär zu dem am Stutzen angeordneten Innengewinde ausgebildetes Außengewinde, über welches es mit dem Ausgleichsbehälter verschraubbar ist.

Wiederum alternativ zu einer Verschraubung kann auch ein Bajonettverschluss oder eine Clipsverbindung zur Fixierung der Wechselkartusche an dem Ausgleichbehälter vorgesehen sein.

Bei einer weiteren vorteilhaften Ausführungsform des erfindungsgemäßen Ausgleichsbehälters weist das Gehäuse der Wechselkartusche einen Rand auf, der bei an dem Ausgleichsbehälter angeordneter Wechselkartusche dicht an diesem anliegt und zusammen mit dem Gehäuse der Wechselkartusche und dem Ausgleichsbehälter einen Belüftungsraum begrenzt, der über die zweite Öffnung im Gehäuse der Wechselkartusche mit einer Trockenseite der Trocknungseinrichtung und über das erste Rücklaufsperrventil mit einem Innenraum des Ausgleichsbehälters verbunden ist. Beim Anbringen der Wechselkartusche an den Ausgleichsbehälter erfolgt somit ein Aufsetzen des Randes der Wechselkartusche auf dem Ausgleichsbehälter, wodurch sich der nach außen abgeschlossene Belüftungsraum ergibt. Dies bietet den großen Vorteil, dass die Wechselkartusche unabhängig von ihrer Drehendstellung eine Kommunikation über den ersten Strömungspfad mit dem Innenraum des Ausgleichsbehälters ermöglicht. Insbesondere muss dabei kein Fluchten der zweiten Öffnung der Wechselkartusche mit einer zugehörigen Öffnung im Ausgleichsbehälter hergestellt werden.

Die vorliegende Erfindung beruht weiter auf dem allgemeinen Gedanken, ein Kühlsystem für eine Batterieanordnung mit einem in den vorherigen Absätzen beschriebenen Ausgleichsbehälter auszustatten. Ein derartiges Kühlsystem kann beispielsweise in einem Elektrofahrzeug eingebaut sein. Dadurch ist es möglich, einen unerwünschten Wasser- und Schmutzeintrag von der Umgebung in den Ausgleichsbehälter ebenso zu unterbinden, wie einen unerwünschten Kohlenwasserstoffaustrag aus dem Ausgleichsbehälter in die Umgebung. Durch die Integration der Filtereinrichtung, der Trocknungseinrichtung sowie der Kohlenwasserstoffadsorbereinrichtung in die Wechselkartusche kann zudem eine vergleichsweise einfache Wartung durch ein einfaches Austauschen der Wechselkartusche erfolgen. Besonders kostengünstig lässt sich dies realisieren, sofern das erste und zweite Rücklaufsperrventil am Ausgleichsbehälter angeordnet sind.

Neben der Wechselkartusche und dem Ausgleichsbehälter soll auch Schutz für eine entsprechende Verwendung derselben in einem Kühlsystem und/oder einem Elektrofahrzeug begehrt werden.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in der Zeichnung anders dargestellt ist.

Ein bevorzugtes Ausführungsbeispiel der Erfindung ist in der Zeichnung dargestellt und wird in der nachfolgenden Beschreibung näher erläutert.

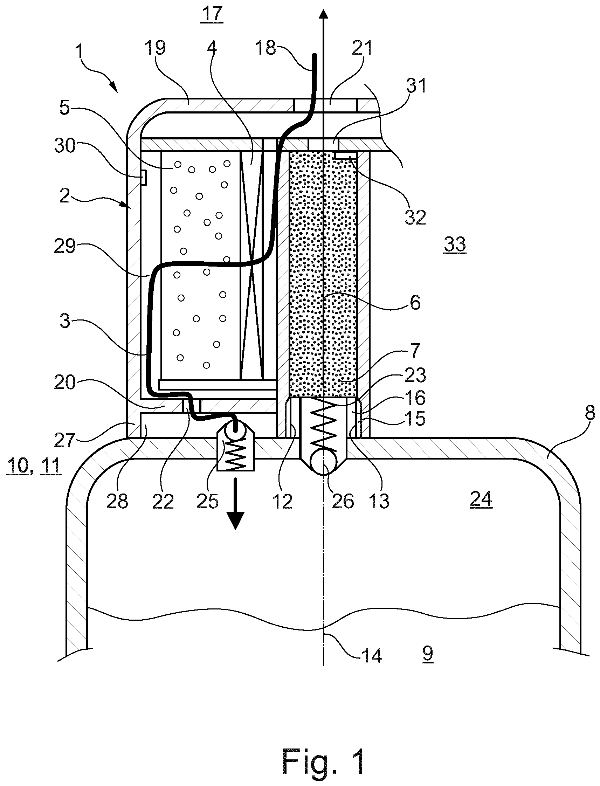

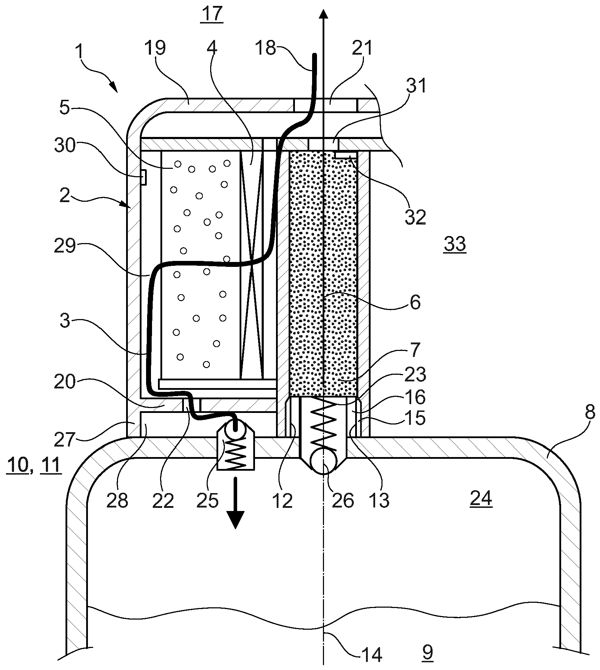

- Figur 1: eine Schnittdarstellung durch eine mögliche Ausführungsform einer an einem erfindungsgemäßen Ausgleichsbehälter angeordneten erfindungsgemäßen Wechselkartusche.

Entsprechend der Figur 1, weist eine erfindungsgemäße Wechselkartusche 1 zum Reinigen und Trocknen von Luft eine Gehäuse 2 auf, in dem ein erster Strömungspfad 3 mit einer Filtereinrichtung 4, insbesondere einem Ringfilter, und einer Trocknungseinrichtung 5 angeordnet ist. Ebenfalls vorgesehen ist ein zum ersten Strömungspfad 3 entgegengesetzt verlaufender zweiter Strömungspfad 6 mit einer Kohlenwasserstoffadsorbereinrichtung 7. Die Wechselkartusche 1 ist dabei entsprechend der Figur 1 der Übersichtlichkeit halber lediglich in ihrer linken Hälfte dargestellt.

Die Wechselkartusche 1 kann beispielsweise an einem Ausgleichsbehälter 8 für dielektrische Kühlflüssigkeit 9 angeordnet, insbesondere angeschraubt, sein, wobei ein derartiger Ausgleichsbehälter 8 mit der daran angeschraubten Wechselkartusche 1, beispielsweise in einem Kühlsystem 10 für eine Batterieanordnung 33 in einem Elektrofahrzeug 11 eingesetzt bzw. verwendet werden kann.

Die Wechselkartusche 1 besitzt an einem Eingang 12 des zweiten Strömungspfades 6 ein Innengewinde 3 zum Anschrauben an den Ausgleichsbehälter 8, wobei die Kohlenwasserstoffadsorbereinrichtung 7 koaxial zu einer Achse 14 der Wechselkartusche 1 angeordnet ist. Die Achse 14 bezeichnet dabei zugleich auch die Schraubachse. Der Ausgleichsbehälter 8 besitzt ein zu dem Innengewinde 13 komplementäres Außengewinde 15 an einem Stutzen 16, wodurch eine vergleichsweise einfache Montage der Wechselkartusche 1 am Ausgleichsbehälter 8 durch ein einfaches Aufschrauben ermöglicht wird.

Alternativ dazu kann an dem erfindungsgemäßen Ausgleichsbehälter 8 auch ein Stutzen 16 mit einem Innengewinde angeordnet sein, wobei ein zweites Rücklaufsperrventil 26 in dem Stutzen 16 angeordnet ist. In diesem Fall besitzt die Wechselkartusche 1 ein komplementär zu dem am Stutzen 16 angeordneten Innengewinde ausgebildetes Außengewinde, über welches es mit dem Ausgleichsbehälter 8 verschraubbar ist. Wiederum alternativ zu einer Verschraubung kann auch ein nicht gezeigter Bajonettverschluss oder eine Clipsverbindung zur Fixierung der Wechselkartusche 1 an dem Ausgleichbehälter 8 vorgesehen sein. Unabhängig von der jeweiligen Verbindungsmechanik werden ein schnelles und einfaches Wechseln der Wechselkartusche 1 sowie ein zuverlässiges Verhindern eines unerwünschten Austretens von Kohlenwasserstoffen ermöglicht.

Die Filtereinrichtung 4 kann als ein die Kohlenwasserstoffadsorbereinrichtung 7 koaxial umgebender Faltenstern ausgebildet sein, wodurch sich eine vergleichsweise große Filterfläche auf vergleichsweise kleinem Bauraum ergibt. Hierdurch können insbesondere ein Strömungswiderstand klein und eine Filtrationsleistung groß gehalten werden. Die Trocknungseinrichtung 5 umgibt die Kohlenwasserstoffadsorbereinrichtung 7 und im vorliegenden Fall auch die Filtereinrichtung 4 koaxial, sodass von einer Umgebung 17 über den ersten Strömungspfad 3 durch die Wechselkartusche 1 strömende Luft 18 zunächst die Filtereinrichtung 4 und anschließend die Trocknungseinrichtung 5 durchströmt, wodurch die Luft 18 zunächst in der Filtereinrichtung 4 von Schmutzstoffen und anschließend in der Trocknungseinrichtung 5 von Wasseranteilen befreit wird. Die Trocknungseinrichtung 5 kann dafür beispielsweise ein Molekularsieb, insbesondere ein Zeolith, aufweisen.

Das Gehäuse 2 der Wechselkartusche 1 besitzt einen Deckel 19 sowie einen Boden 20, die getrennt und miteinander verbindbar ausgebildet sein können, die alternativ aber auch einstückig ausgebildet sein können. Im Deckel 19 ist dabei eine erste Öffnung 21 angeordnet, während im Boden 20 eine zweite Öffnung 22 angeordnet ist. Zentral im Boden 20 ist zusätzlich noch eine dritte Öffnung 23 vorgesehen. Der erste Strömungspfad 3 verläuft von der ersten Öffnung 21 bis zur zweiten Öffnung 22, während der zweite Strömungspfad 6 von der dritten Öffnung 23 zur ersten Öffnung 21 verläuft.

Ein Austausch zwischen einem Innenraum 24 des Ausgleichsbehälters 8 und der Umgebung 17 erfolgt dabei üblicherweise ausschließlich dann, wenn es Volumenschwankungen, der dielektrischen Kühlflüssigkeit 9, beispielsweise aufgrund von Temperaturänderungen, erfordern. Um dabei jedoch einen unkontrollierten Austausch zu verhindern, sind ein erstes Rücklaufsperrventil 25 sowie das zweite Rücklaufsperrventil 26 vorgesehen, wobei das erste Rücklaufsperrventil von der Umgebung 17 in den Innenraum 24 des Ausgleichsbehälters 8 durchgängig ist, während das zweite Rücklaufsperrventil 26 in die entgegengesetzte Richtung durchlässig ist. Zum Öffnen des ersten und/oder zweiten Rücklaufsperrventils 25, 26 ist dabei ein entsprechender Überdruck bzw. Unterdruck erforderlich.

Betrachtet man die Figur 1 näher, so kann man erkennen, dass sowohl das erste Rücklaufsperrventil 25 als auch das zweite Rücklaufsperrventil 26 an dem Ausgleichsbehälter 8 angeordnet sind, wodurch ein Austausch der Wechselkartusche 1 problemlos möglich und letztere zudem kostengünstig herstellbar ist. Rein theoretisch ist selbstverständlich auch eine alternative Ausführungsform denkbar, bei welcher das erste Rücklaufsperrventil 25 und das zweite Rücklaufsperrventil 26 an der Wechselkartusche 1 angeordnet sind.

Im gezeigten Ausführungsbeispiel ist das zweite Rücklaufsperrventil 26 in dem Stutzen 16 angeordnet.

Das Gehäuse 2 der Wechselkartusche 1 besitzt einen Rand 27, der bei an dem Ausgleichsbehälter 8 angeordneter Wechselkartusche 1 dicht an diesem anliegt und zusammen mit dem Gehäuse 2 der Wechselkartusche 1 und dem Ausgleichsbehälter 8 bzw. dessen Gehäuse einen Belüftungsraum 28 begrenzt, der über die zweite Öffnung 22 im Gehäuse 2 der Wechselkartusche 1 mit einer Trockenseite 29 der Trocknungseinrichtung 5 und über das erste Rücklaufsperrventil 25 mit dem Innenraum 24 des Ausgleichsbehälters 8 verbunden ist. Der Rand 27 ermöglicht so das Begrenzen des Belüftungsraums 28 und eine drehwinkelunabhängige Verbindung der zweiten Öffnung 22 mit dem ersten Rücklaufsperrventil 25.

Auf der Trockenseite 29 in der Wechselkartusche 1 kann darüber hinaus ein Feuchtesensor 30 zur Erfassung eines Wasseranteils der dem Ausgleichsbehälter 8 zuzuführen Luft angeordnet sein. Zugleich oder alternativ kann im Bereich der Kohlenwasserstoffadsorbereinrichtung 7, insbesondere an einem Ausgang 31 derselben, ein Kohlenwasserstoffsensor 32 angeordnet sein, der einen Kohlenwasserstoffanteil der der Umgebung 17 zuzuführenden Luft erfasst. Wird dabei beispielsweise von dem Feuchtesensor 30 ein zu hoher Wasseranteil gemeldet, so kann ein Warnsignal zum Austausch der Wechselkartusche 1 erzeugt werden. In analoger Weise kann ein derartiges Warnsignal auch bei einem von dem Kohlenwasserstoffsensor 32 erfassten Kohlenwasserstoffanteil erzeugt werden, sofern der erfasste Kohlenwasserstoffanteil oberhalb eines vordefinierten Grenzwertes liegt.

Mit der erfindungsgemäßen Wechselkartusche 1 und dem erfindungsgemäßen Ausgleichsbehälter 8 lässt sich eine dielektrische Kühlflüssigkeit 9 wirkungsvoll vor Schmutz und zu hoher Feuchte und zugleich die Umgebung 17 wirkungsvoll vor einem unerwünschten Austreten von leicht flüchtigen Anteilen aus dem Ausgleichsbehälter 8, wie beispielsweise Kohlenwasserstoffen, schützen. Insbesondere durch die Anordnung der beiden Rücklaufsperrventile 25, 26 am Ausgleichsbehälter 8 ist letzterer auch bei abgenommener Wechselkartusche 1 zuverlässig verschlossen. Der besondere Vorteil dieses Systems liegt insbesondere darin, dass bei einem Austausch der Wechselkartusche 1 die Rücklaufsperrventile 25, 26 weiterverwendet werden können.

## Patentansprüche

1. Wechselkartusche (1) zum Reinigen und Trocknen von Luft, mit einem Gehäuse (2), in dem ein erster Strömungspfad (3) mit einer Filtereinrichtung (4) und einer Trocknungseinrichtung (5) sowie ein dazu entgegengesetzter zweiter Strömungspfad (6) mit einer Kohlenwasserstoffadsorbereinrichtung (7) verläuft.

2. Wechselkartusche nach Anspruch 1,
**dadurch gekennzeichnet,**
**dass** die Wechselkartusche (1) an einem Eingang (12) des zweiten Strömungspfades (6) ein Innengewinde (13) zum Anschrauben an einen Ausgleichsbehälter (8) für dielektrische Kühlflüssigkeit (9) aufweist, wobei die Kohlenwasserstoffadsorbereinrichtung (7) koaxial zu einer Achse (14) der Wechselkartusche (1) angeordnet ist.

3. Wechselkartusche nach einem der vorhergehenden Ansprüche,
**dadurch gekennzeichnet,**
- **dass** die Filtereinrichtung (4) als ein die Kohlenwasserstoffadsorbereinrichtung (7) koaxial umgebender Faltenstern ausgebildet ist,
- **dass** die Trocknungseinrichtung (5) die Kohlenwasserstoffadsorbereinrichtung (7) und die Filtereinrichtung (4) koaxial umgibt.

4. Wechselkartusche nach einem der vorhergehenden Ansprüche,
**dadurch gekennzeichnet,**
- **dass** die Kohlenwasserstoffadsorbereinrichtung (7) Aktivkohle und/oder einen Kohlenwasserstoffsensor aufweist, und/oder
- **dass** die Trocknungseinrichtung (5) ein Molekularsieb aufweist.

5. Wechselkartusche nach einem der vorhergehenden Ansprüche,
**dadurch gekennzeichnet,**
**dass** das Gehäuse (2) einen Deckel (19) mit einer ersten Öffnung (21), einen Boden (20) mit einer seitlichen zweiten Öffnung (22) und einer zentral angeordneten dritten Öffnung (23) aufweist.

6. Wechselkartusche nach Anspruch 5,
**dadurch gekennzeichnet,**
**dass** der erste Strömungspfad (3) von der ersten Öffnung (21) zur zweiten Öffnung (22) und der zweite Strömungspfad (6) von der dritten Öffnung (23) zur ersten Öffnung (21) verläuft.

7. Wechselkartusche nach einem der vorhergehenden Ansprüche,
**dadurch gekennzeichnet,**
**dass** auf einer Trockenseite (29) der Trocknungseinrichtung (5) ein Feuchtesensor (30) angeordnet ist.

8. Wechselkartusche nach einem der vorhergehenden Ansprüche,
**dadurch gekennzeichnet,**
**dass** im Bereich der Kohlenwasserstoffadsorbereinrichtung (7) ein Kohlenwasserstoffsensor (32) angeordnet ist.

9. Ausgleichsbehälter (8) für eine dielektrische Kühlflüssigkeit (9),
- mit einer Wechselkartusche (1) nach einem der Ansprüche 1 bis 8,
- mit einem ersten Rücklaufsperrventil (25), das von einer Umgebung (17) zum Ausgleichsbehälter (8) durchlässig ist,
- mit einem zweiten Rücklaufsperrventil (26), das vom Ausgleichsbehälter (8) zur Kohlenwasserstoffadsorbereinrichtung (7) durchlässig ist,

10. Ausgleichsbehälter nach Anspruch 9,
**dadurch gekennzeichnet,**
- **dass** das erste Rücklaufsperrventil (25) und das zweite Rücklaufsperrventil (26) an dem Ausgleichsbehälter (8) angeordnet sind, oder
- **dass** das erste Rücklaufsperrventil (25) und das zweite Rücklaufsperrventil (26) an der Wechselkartusche (1) angeordnet sind.

11. Ausgleichsbehälter nach Anspruch 9 oder 10,
**dadurch gekennzeichnet,**
- **dass** an dem Ausgleichsbehälter (8) ein Stutzen (16) mit einem Außengewinde (15) angeordnet ist, wobei das zweite Rücklaufsperrventil (26) in dem Stutzen (16) angeordnet ist,
- **dass** die Kohlenwasserstoffadsorbereinrichtung (7) koaxial zu einer Achse (14) der Wechselkartusche (1) und zum Stutzen (16) des Ausgleichsbehälters (8) angeordnet ist.

12. Ausgleichsbehälter nach einem der Ansprüche 9 bis 11,
**dadurch gekennzeichnet,**
**dass** das Gehäuse (2) der Wechselkartusche (1) einen Rand (27) aufweist, welcher bei an dem Ausgleichsbehälter (8) angeordneter Wechselkartusche (1) dicht an diesem anliegt und zusammen mit dem Gehäuse (2) der Wechselkartusche (1) und dem Ausgleichsbehälter (8) einen Belüftungsraum (28) begrenzt, der über die zweite Öffnung (22) im Gehäuse (2) der Wechselkartusche (1) mit einer Trockenseite (29) der Trocknungseinrichtung (5) und über das erste Rücklaufsperrventil (25) mit einem Innenraum (24) des Ausgleichbehälters (8) verbunden ist.

13. Kühlsystem (10) für eine Batterieanordnung (33) mit einem Ausgleichsbehälter (8) nach einem der Ansprüche 9 bis 12.

14. Elektrofahrzeug (11) mit einer Batterieanordnung (33) und einem Kühlsystem (10) nach Anspruch 13 zur Kühlung der Batterieanordnung (33).
